# FASCICULE DE BREVET EUROPEEN

(11) **EP 0 605 294 B1**
(45) Date de publication et mention de la délivrance du brevet: **18.11.1998**
(21) Numéro de dépôt: 93403129.5
(22) Date de dépôt: 21.12.1993
(51) Int. Cl.: G01N 23/04, G01F 17/00, G06T 1/00

(54) **Procédé et reconstitution de volumes internes d'un solide en vue de calculs et application associée**
Verfahren und Wiederherstellung des Innenvolumens eines festen Körpers zum Rechnen und zugehörige Anwendung
Method and reconstitution of the internal volumes of a solid in order to perform calculations and associated application

(30) Priorité: 29.12.1992 FR 9215985
(43) Date de publication de la demande: 06.07.1994
(73) Titulaire: INSTITUT FRANCAIS DU PETROLE, 92502 Rueil-Malmaison (FR)
(72) Inventeur: Menegazzi, Pascal, F-92500 Rueil Malmasion (FR)

(56) Documents cités:
- DE-A- 3 340 024
- US-A- 4 879 652
- US-A- 4 969 110
- COMPUTER VISION, GRAPHICS, AND IMAGE PROCESSING, vol.44, no.1, Octobre 1988, DULUTH,MN,USA pages 1 - 29 J.-D. BOISSONNAT 'Shape Reconstruction from Planar Cross Sections'

## Description

La présente invention concerne la reconstitution de volumes situés à l'intérieur d'un solide, le plus souvent cachés ou difficilement accessibles et dont on souhaite non seulement connaître avec précision la forme, mais à partir desquels des calculs essentiellement numériques doivent être effectués.

Il est connu de déterminer, avec plus ou moins de précision, des grandeurs physiques, des longueurs par exemple, de formes simples situées à l'intérieur d'élément solide.

Ces grandeurs physiques ne pouvant être mesurées directement par des instruments classiques, tels que règle graduée, pied à coulisse, rapporteur..., on a alors recours à des procédés utilisant par exemple les ultrasons ou l'absorption d'un rayonnement donné pour déterminer la forme et/ou la dimension du volume à analyser.

Selon les applications envisagées, il est possible de déterminer soit des valeurs numériques relatives auxdits volumes, soit des formes ou contours des volumes ainsi cachés.

Ainsi, l'imagerie médicale cherche souvent à reconstituer des contours selon des plans. Un tel procédé est connu du document COMPUTER VISION, GRAPHICS, AND IMAGE PROCESSING, vol. 44, no. 1, Octobre 1988, DULUTH, MN, USA, page 1 - 29, J.-D. BOISSONNAT "Shape Reconstitution from Planar Cross Sections". Les scanners et les appareils basés sur la résonance magnétique nucléaire par exemple permettent de visualiser des formes de différents organes humains (cerveau, foie...) selon des coupes ; ils ne permettent généralement pas d'aller plus loin dans l'analyse.

Par ailleurs, il est connu de reconstituer à l'aide de méthodes mathématiques des volumes quelconques dont on connait d'avance tout ou partie des caractéristiques géométriques.

Quelques caractéristiques géométriques de la forme à reconstituer constituent alors les entrées d'un programme qui détermine automatiquement la forme générale : ces programmes sont appelés "mailleurs" puisqu'ils définissent la géométrie à partir de mailles (ou polygones) juxtaposées encore appelées "maillage". Les maillages peuvent être bidimensionnels ou tridimensionnels.

Il est enfin connu d'effectuer différents calculs à partir des maillages ; les algorithmes de calculs dites aux éléments finis ou encore aux différences finies sont couramment utilisés à ces fins.

Mais, comme il a déjà été dit, ces méthodes de calcul nécessitent de connaître à l'avance les géométries des éléments sur lesquels les calculs sont faits, et notamment les géométries des volumes cachés.

Ceci est souvent difficile surtout lorsque l'on souhaite réaliser des calculs de précision.

En outre, les données, c'est-à-dire les géométries des volumes en question, sont généralement entrées point par point, ce qui nécessite un temps considérable de mise en oeuvre.

Dans les meilleures conditions, les points les plus significatifs de la géométrie doivent être entrés, un maillage automatique pouvant alors générer les caractéristiques des autres points du maillage, par interpolation. Ce type de procédés ne permet pas, bien entendu, de traiter des géométries trop complexes.

La présente invention vise à remédier notamment aux inconvénients qui viennent d'être cités.

Elle permet en particulier de reconstituer de façon précise, des volumes complexes, puis de réaliser des calculs essentiellement numériques à partir de tels volumes.

En outre, l'objet de la présente demande s'applique avantageusement, mais non exclusivement à des volumes cachés, situés à l'intérieur d'un solide.

Il est donc possible de reconstituer et d'analyser des volumes dont on ne connait pas précisément la géométrie. L'invention permet, par exemple, de faire des calculs sur des tubulures noyées dans un solide et présentant une certaine usure ou au contraire étant recouvertes d'une couche formée pendant le fonctionnement. Ainsi, il est possible de reconstituer avec précision la forme de tubulures internes après un certain temps d'utilisation d'une telle tubulure, et d'effectuer directement des calculs à partir de ces volumes cachés et inconnus à priori. Le domaine du contrôle non destructif est ici visé par l'invention.

L'avantage principal de l'invention réside dans la possibilité de traiter des volumes complexes avec un gain de temps considérable par rapport à l'art antérieur.

En effet, comme il ressort de la description ci-avant, lorsque des volumes complexes doivent faire l'objet de calculs scientifiques, leur géométrie demande un long temps pour être intégrés dans la mémoire de l'ordinateur.

La présente invention permet une saisie quasi automatique, c'est-à-dire très rapide de n'importe quelle géométrie.

Les buts et avantages essentiels qui viennent d'être énoncés sont atteints grâce à un procédé de reconstitution automatique de volumes situés notamment à l'intérieur de solides, en vue de réaliser des calculs relatifs aux volumes.

Conformément à l'invention, le procédé comprend les étapes qui consistent à :
a) réaliser des images numérisées de plusieurs coupes parallèles de l'espace environnant le volume,
b) traiter lesdites données de façon à créer un contour numérique du volume, et
c) traiter les données relatives au contour afin de les rendre exploitables pour des calculs essentiellement numériques.

Plus précisément, l'étape b) du procédé consiste à :
- déterminer les contours du volume sur chaque image numérisée,
- faire une approximation des contours par des polygones,
- repérer les sommets des polygones,
- créer à partir des données relatives aux sommets, un maillage surfacique qui approche au mieux le contour réel du volume.

En d'autres termes, l'invention selon l'étape c) consiste à utiliser un algorithme permettant de créer un maillage volumique de l'objet à partir du maillage surfacique constitué lors de l'étape b). Ce maillage volumique sert ensuite à un calcul numérique.

Selon un mode préféré de réalisation de l'invention, les polygones créés sont essentiellement des triangles et les éléments volumiques sont essentiellement des tétraèdres.

Les algorithmes de calcul peuvent être de type éléments finis ou volumes finis non structurés.

Conformément à un mode de réalisation de l'invention, les images numérisées sont obtenues au moyen d'un scanner qui permet de faire l'acquisition puis une numérisation de chaque coupe.

Sans sortir du cadre de l'invention, les images numérisées peuvent être obtenues à partir de fichiers (CAO) constitués d'entités mathématiques traitées de façon à obtenir des données sur chaque pixel d'image.

Selon un autre de ses aspects, l'invention vise l'application du procédé ci-dessus défini à la reconstitution d'un circuit de refroidissement interne d'une culasse d'un moteur à combustion interne. La culasse peut être constituée d'aluminium.

L'invention sera mieux comprise à la lecture de la description faite ci-après, à titre illustratif, en référence aux dessins annexés sur lesquels :
- la figure 1 est un organigramme montrant les principales opérations accomplies lors de la mise en oeuvre d'un procédé conforme à l'invention,
- la figure 2 montre de façon schématique différentes coupes parallèles d'un volume à reconstituer,
- la figure 3 montre schématiquement un volume reconstitué conformément à l'invention, et
- les figures 4A, 4B et 4C montrent chacune un tomogramme obtenu avec un scanner.

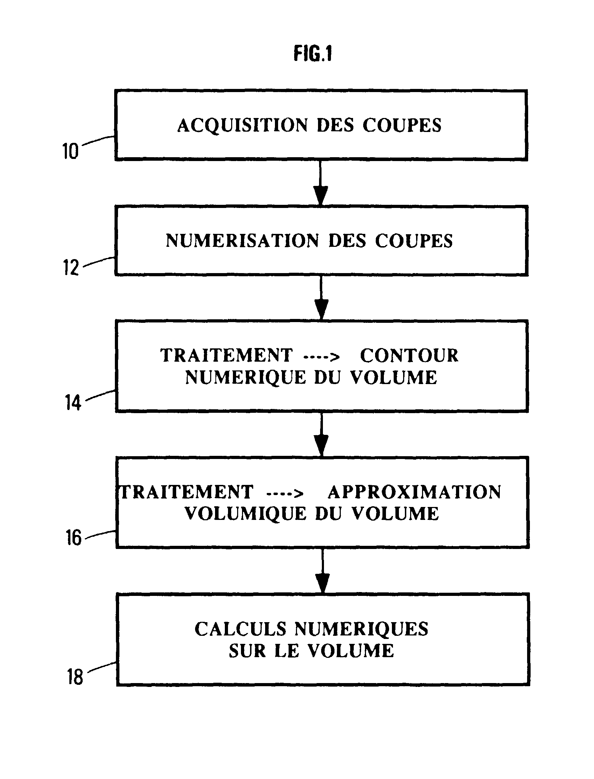

Les principales étapes du procédé selon l'invention apparaissent sur la figure 1.

La première étape (10) consiste à obtenir des coupes de l'espace environnant le volume, parallèles les unes aux autres, la distance entre chaque coupe, de préférence constante, étant définie en fonction de l'application envisagée. L'espacement entre les coupes sera choisi de façon à bien détecter les variations de géométrie. Un scanner, connu en soi, peut être utilisé pour obtenir les coupes.

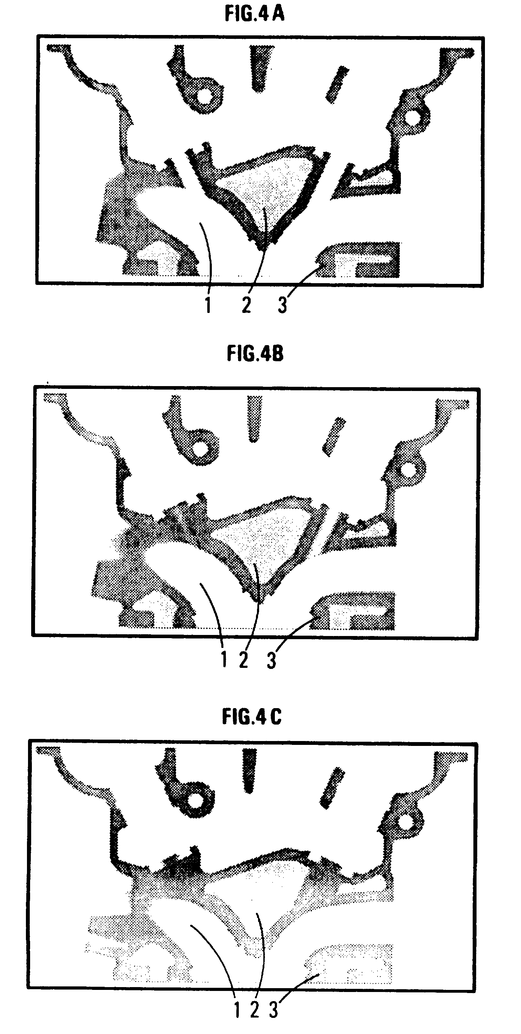

On obtient ainsi une série de coupes, telles que montrées sur les figures 4A, 4B et 4C par exemple. Ces coupes peuvent être numérisées par le scanner lui-même ou bien par un calculateur : étape 12.

Sans sortir du cadre de l'invention, il peut être envisagé d'obtenir des coupes numérisées à partir de fichiers, par exemple de fichiers CAO constitués d'entités mathématiques. Ces entités mathématiques sont traitées par un logiciel spécifique destiné à les transformer en données attachées à chaque pixel. Rappelons qu'un pixel est une unité élémentaire d'image numérique.

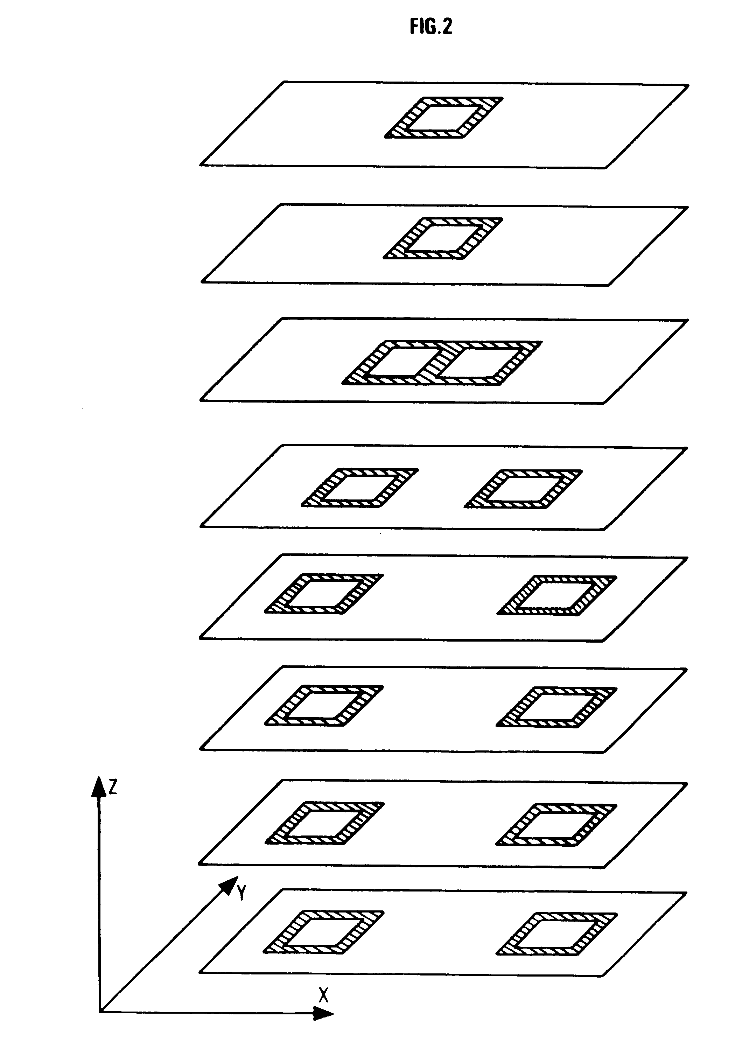

La figure 2 montre schématiquement l'ensemble des coupes qui peuvent être obtenues pour un volume donné, à titre d'exemple.

Dans tous les cas, à l'étape suivante (étape 14 de la figure 1), les données numérisées, regroupées en fichiers, sont traitées par un logiciel spécifique destiné à créer un maillage ou contour, dit surfacique, du volume à reconstituer.

Plus précisément, l'étape 14 consiste à :
- repérer les contours dudit volume sur chaque coupe,
- faire une approximation de chaque contour par des polygones,
- si nécessaire, modifier ou rectifier les contours,
- repérer certains sommets (ou noeuds) des polygones afin de leur affecter des caractéristiques physiques particulières, encore appelées conditions aux limites,
- créer une représentation surfacique du volume sous forme de contour du volume, constituée de polygones juxtaposés, le contour approchera au mieux le contour réel du volume.

En d'autres termes, à la fin de l'étape 14, on obtient un maillage (formé de polygones) de l'enveloppe externe du volume.

L'étape 16 a pour but de créer un maillage volumique du volume, c'est-à-dire d'obtenir une approximation numérique en trois dimensions dudit volume. Autrement dit, le volume à reconstituer est approché par un ensemble de volumes unitaires juxtaposés les uns aux autres. On utilise à cet effet un algorithme de maillage automatique, algorithme de VORONOI par exemple, qui permet de créer un maillage en trois dimensions de préférence directement interfaçable avec un logiciel de calcul, c'est-à-dire directement exploitable en vue de calculs numériques.

L'étape 18 consiste donc à effectuer des calculs numériques à partir des données relatives au maillage volumique.

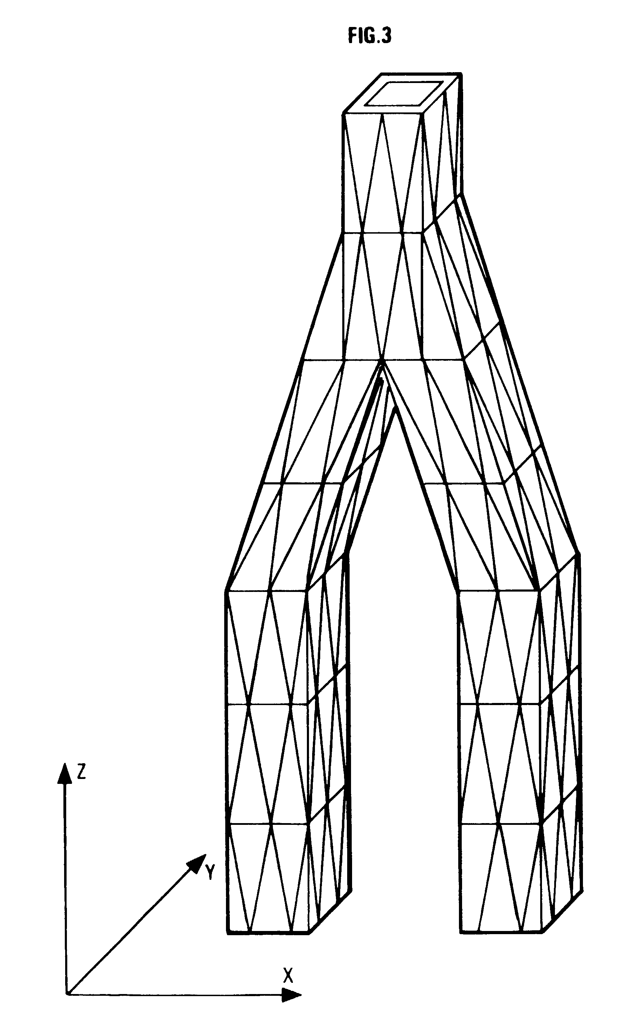

La figure 3 montre de façon très simplifiée un exemple de volume maillé. Selon cette illustration, les volumes élémentaires (ou mailles volumiques) sont des tétraèdres tandis que les polygones surfaciques sont des triangles. Bien entendu, d'autres types de polygones et de volumes élémentaires peuvent être traités sans sortir du cadre de la présente invention.

Un exemple particulier d'application du procédé conforme à l'invention va maintenant être donné.

La méthodologie décrite ci-dessus a été utilisée pour décrire et effectuer des calculs sur les circuits de refroidissement internes d'une culasse d'un moteur à combustion interne.

La culasse selon cet exemple est en aluminium, matériau compatible avec les capacités du scanner utilisé. En effet, des métaux trop absorbants pour le rayonnement X produit par le scanner ne peuvent être utilisés ; l'aluminium, composé de constituants légers, permet donc de bonnes performances, en particulier une bonne qualité de l'image.

Avant d'être analysée par le scanner, la culasse est de préférence débarrassée des pièces constituées de métaux lourds, pour les raisons évoquées ci-dessus.

Afin de le distinguer très clairement des autres éléments environnants (autres circuits notamment), le volume à analyser a été rempli d'eau. Puis l'analyse au scanner est réalisée en effectuant des images successives de coupes.

Les figures 4A, 4B et 4C représentent chacune un tomogramme, c'est-à-dire une photographie d'une image de coupe obtenue selon le présent exemple de réalisation de l'invention.

Dans le présent exemple d'application de l'invention, il a été effectué une coupe tous les deux millimètres, et environ 200 coupes ont été réalisées. Ces images sont donc numérisées, mémorisées puis traitées selon les étapes 14 et 16 déjà décrites.

Sur les figures 4A, 4B et 4C, les zones blanches 1 correspondent à des volumes vides, remplies d'air ; les zones grisées les plus foncées 3 représentent la matière (ici la culasse en aluminium) tandis que les zones 2 en gris moyen correspondent au volume à analyser, c'est-à-dire, au circuit de refroidissement de la culasse.

Un maillage surfacique puis un maillage volumique de la géométrie sont donc successivement obtenus. Le maillage volumique possède au total plus de 100.000 noeuds à partir desquels un programme de calcul peut effectuer différents types de calculs. Par exemple, un code de calcul du domaine de la mécanique des fluides peut être utilisé : des températures, débits, vitesses d'écoulements... peuvent ainsi être calculés aux différents noeuds du maillage, c'est-à-dire en une multitude de points de la structure à analyser.

Pour illustrer l'un des avantages de l'invention énoncés en tête de la description, un calcul du type défini ci-dessus nécessite environ une semaine de travail.

Pour aboutir à un résultat sensiblement comparable, il aurait fallu, avec des méthodes traditionnelles, plus ou moins six mois de travail.

Bien entendu, l'invention est utilisable dans de nombreux autres types d'analyse que celui qui vient d'être brièvement décrit.

## Revendications

1. Procédé de reconstitution de volume situé à l'intérieur d'un solide en vue de réaliser des calculs relatifs audit volume permettant d'en déterminer des propriétés physico-mécaniques, caractérisé en ce qu'il comprend les étapes qui consistent à :
a) réaliser des images numérisées de plusieurs coupes parallèles de l'espace environnant ledit volume,
b) traiter lesdites images numérisées de façon à créer un contour numérique dudit volume, en
- déterminant les contours dudit volume sur chaque image numérisée,
- faisant une approximation desdits contours par des polygones,
- repérant les sommets desdits polygones,
- créant à partir des données relatives auxdits sommets, un maillage surfacique qui approche au mieux le contour réel du volume
c) traiter les données relatives audit contour afin de les rendre exploitables pour des calculs numériques.

2. Procédé selon la revendication 1, caractérisé en ce que l'étape c) consiste à utiliser un algorithme permettant de reconstituer numériquement ledit volume constitué d'éléments volumiques à partir de données relatives audit contour.

3. Procédé selon l'une quelconque des revendications 1 ou 2, caractérisé en ce que lesdits polygones sont des triangles et en ce que lesdits éléments volumiques sont des tétraèdres.

4. Procédé selon la revendication 2, caractérisé en ce que ledit algorithme est de type aux éléments finis non structurés.

5. Procédé selon la revendication 2, caractérisé en ce que ledit algorithme est de type aux volumes finis non structurés.

6. Procédé selon l'une quelconque des revendications précédentes, caractérisé en ce que les images numérisées sont obtenues au moyen d'un scanner qui permet de faire l'acquisition puis une numérisation de chaque coupe.

7. Procédé selon l'une des revendications 1 à 6, caractérisé en ce que les images numérisées sont obtenues à partir de fichiers (CAO) constitués d'entités mathématiques traitées de façon à obtenir des données sur chaque pixel d'image.

8. Application du procédé selon l'une quelconque des revendications précédentes à la reconstitution d'un circuit de refroidissement interne d'une culasse d'un moteur à combustion interne.

9. Application selon la revendication 8, caractérisée en ce que ladite culasse est constituée d'aluminium.

## Patentansprüche

1. Verfahren zur Rekonstitution von Volumen, angeordnet im Inneren eines Festkörpers, um Berechnungen bezüglich dieses Volumens, die es ermöglichen, hieraus physiko-mechanische Eigenschaften zu bestimmen, vorzunehmen, dadurch gekennzeichnet, daß es die folgenden Stufen umfaßt, die bestehen in:
a) Realisieren der digitalisierten Bilder aus mehreren Schnitten parallel zu dem dieses Volumen umgebenden Raum,
b) Verarbeiten dieser digitalisierten Bilder derart, daß eine numerische Kontur dieses Volumens erzeugt wird, indem
- man die Konturen dieses Volumens auf jedem digitalisierten Bild bestimmt,
- eine Annäherung dieser Konturen durch Polygone vornimmt,
- die Spitzen dieser Polygone markiert und
- ausgehend von den diese Spitzen betreffenden Daten ein flächenbezogenes Gitter herstellt, das sich am besten an die reelle Kontur des Volumens annähert und
c) Verarbeiten der sich auf diese Kontur beziehenden Daten, derart, daß sie für numerische Berechnungen auswertbar sind.

2. Verfahren nach Anspruch 1, dadurch gekennzeichnet, daß die Stufe c) darin besteht, einen Algorithmus zu verwenden, der es ermöglicht, numerisch dieses aus Volumenelementen gebildete Volumen ausgehend von auf diese Kontur bezogenen Daten zu rekonstituieren.

3. Verfahren nach einem der Ansprüche 1 oder 2, dadurch gekennzeichnet, daß diese Polygone Dreiecke sind und daß diese Volumenelemente Tetraeder sind.

4. Verfahren nach Anspruch 2, dadurch gekennzeichnet, daß dieser Algorithmus vom Typ mit endlichen nicht-strukturierten Elementen ist.

5. Verfahren nach Anspruch 2, dadurch gekennzeichnet, daß dieser Algorithmus vom Typ mit endlichen nicht-strukturierten Volumina ist.

6. Verfahren nach einem der vorhergehenden Ansprüche, dadurch gekennzeichnet, daß die digitalisierten Bilder mittels eines Scanners erhalten werden, der es ermöglicht, die Erfassung, dann eine Digitalisierung jedes Schnittes auszuführen.

7. Verfahren nach einem der Ansprüche 1 bis 6, dadurch gekennzeichnet, daß die digitalisierten Bilder aus Dateien (CAO) erhalten werden, die aus mathematischen Einheiten bzw. mathematischen Gesamtheiten gebildet sind, die derart behandelt sind, daß Daten auf jedem Pixelbild erhalten werden.

8. Anwendung des Verfahrens nach einem der vorhergehenden Ansprüche auf die Rekonstitution bzw. Wiederherstellung eines inneren Kühlkreislaufes eines Zylinderdeckels einer Brennkraftmaschine.

9. Anwendung nach Anspruch 8, dadurch gekennzeichnet, daß dieser Zylinderdeckel aus Aluminium gebildet ist.

## Claims

1. A method of reconstituting a volume located inside a solid with a view to performing computations relating to said volume to enable physical and mechanical properties to be derived therefrom, characterised in that it incorporates the following steps, consisting in:
a) obtaining digitised images of several parallel cross-sections of the area surrounding said volume,
b) processing said digitised images in order to create a digital contour of said volume by
- determining the contours of said volume on each digitised image,
- making an approximation of said contours by polygons,
- locating the vertices of said polygons,
- creating a surface grid pattern from the data pertaining to said vertices, which will best approximate the real contour of the volume,
c) processing the data pertaining to said contour in order to render them workable for the purposes of digital computations.

2. A method as claimed in claim 1, characterised in that step c) consists in applying to the data relating to said contour an algorithm that will enable said volume, made up of volume elements, to be digitally reconstructed.

3. A method as claimed in any one of claims 1 or 2, characterised in that said polygons are triangles and said volume elements are tetrahedra.

4. A method as claimed in claim 2, characterised in that said algorithm is of the non-structured, finite element type.

5. A method as claimed in claim 2, characterised in that said algorithm is of the non-structured, finite volume type.

6. A method as claimed in any one of the preceding claims, characterised in that the digitised images are produced by means of a scanner which enables each cross-section to be acquired and then digitised.

7. A method as claimed in one of claims 1 to 6, characterised in that the digitised images are obtained from files (CAD) made up of mathematical entities which are processed in order to produce data pertaining to each image pixel.

8. Application of the method as claimed in any one of the preceding claims to reconstituting an internal cooling circuit of a cylinder head of an internal combustion engine.

9. Application as claimed in claim 8, characterised in that said cylinder head is made from aluminium.
